## Europäisches Patentamt

## European Patent Office

## Office européen des brevets

(19)

(11) Veröffentlichungsnummer: **0 151 796**
**B1**

(12) **EUROPÄISCHE PATENTSCHRIFT**

(45) Veröffentlichungstag der Patentschrift:
06.04.88

(51) Int. Cl.⁴: **G 06 K 7/10**

(21) Anmeldenummer: **84116236.5**

(22) Anmeldetag: **22.12.84**

(54) **Strichcodeleser.**

(30) Priorität: **12.01.84 DE 3400791**

(43) Veröffentlichungstag der Anmeldung:
**21.08.85 Patentblatt 85/34**

(45) Bekanntmachung des Hinweises auf die Patenterteilung:
**06.04.88 Patentblatt 88/14**

(84) Benannte Vertragsstaaten:
**AT CH DE LI NL**

(56) Entgegenhaltungen:
**DE-A-2 160 711**
**DE-A-2 165 653**

(73) Patentinhaber: **ROBERT BOSCH GMBH, Postfach 50, D-7000 Stuttgart 1 (DE)**

(72) Erfinder: **Howind, Gerhard, Schmiedefurtstrasse 8, D-3210 Elze (DE)**
Erfinder: **Messerschmidt, Rudolf, Ing., Gartenstrasse 2, D-3226 Sibbesse (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

EP 0 151 796 B1

## Beschreibung

### Stand der Technik

Die Erfindung geht aus von einem Strichcodeleser nach der Gattung des Hauptanspruchs. Strichcodeleser mit einer Linse mit fokussierender Wirkung und mit einen Lichtleiter in der Mitte der Linse sind bereits bekannt, solche Strichcodeleser werden beispielsweise unter der Bezeichnung S27301 von der Firma Mikro-Skan angeboten. Bekannte Strichcodeleser erfordern jedoch, daß aufgrund ihres Aufbaues der Sensor in einer bestimmten Haltung über den Strichcode geführt wird, um ein sicheres Ablesen zu erreichen. Ungünstig bei solchen Strichcodelesern ist des weiteren, daß das Licht bei ungünstiger Haltung des Sensors sehr stark abgeschattet ist, so daß ein starker Signalverlust entsteht. In diesem Falle ist eine Auswertung entweder nicht mehr oder nur sehr erschwert möglich.

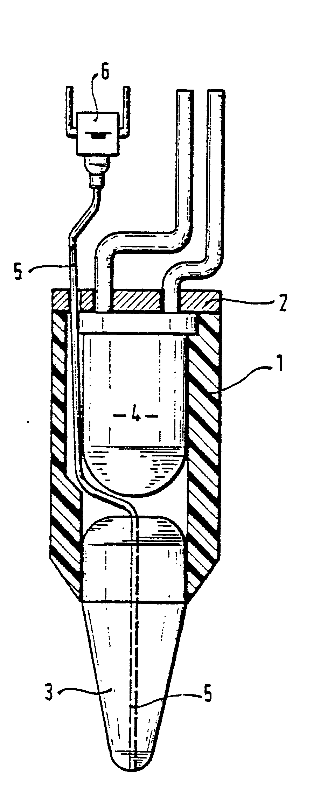

Aus der DE-A1-2 165 653 ist ein optisches Lesegerät bekannt, was eine eingebaute Lichtquelle zur Beleuchtung einer Aufzeichnung sowie eine Lichtaufnahmevorrichtung aufweist, die das von der Zeichnung zurückgeworfene Licht empfängt. Weiterhin ist es aus dieser Entgegenhaltung bereits bekannt, die Beleuchtung des Codeträgers durch rotationssymmetrisch angeordnete Beleuchtungseinrichtungen vorzunehmen in deren Mitte die Lichtaufnahmevorrichtung angeordnet ist, wobei ein Photodetektor einer Auswerteeinrichtung zugeordnet ist, die sich außerhalb des Gehäuses des Lesekopfes befindet. Der konstruktive Aufbau der entgegengehaltenen Vorrichtung weist eine Vielzahl von unterschiedlichen und konstruktiv komplexen Teilen auf.

### Vorteile der Erfindung

Der erfindungsgemäße Strichcodeleser mit den kennzeichnenden Merkmalen des Hauptanspruchs hat demgegenüber den Vorteil, daß eine Abtastung bei einer weitgehend beliebigen Haltung des Strichcodelesers möglich ist.

Günstig ist auch, daß der Lichtempfänger im Bereich der Auswerteschaltung angeordnet ist. Durch die Verwendung eines Lichtleiters ist dies leicht zu realisieren und hat den Vorteil, daß eine Abschirmung gegen Störeinflüsse, wie beispielweise elektromagnetische Felder, leicht durchzuführen ist. In vielen Fälle, erübrigt sich die Abschirmung ganz. Die Verwendung von abgeschirmten Leitungen ist daher nicht erforderlich.

Durch die in den Unteransprüchen aufgeführten Maßnahmen sind vorteilhafte Weiterbildungen und Verbesserungen des im Hauptanspruch angegebenen Strichcodelesers möglich. Besonders vorteilhaft ist es, als Lichtsender eine Leuchtdiode zu verwenden. Durch diese Anordnung läßt sich der, Strichcodeleser besonders preisgünstig aufbauen. Teure Bauelemente entfallen, insbesondere wenn auch der Lichtempfänger als Fototransistor oder als Fotodiode ausgebildet ist. Der Strichcodeleser kann dann mit standardmäßigen verfügbaren optoelektronischen Bauelementen aufgebaut werden, so daß er insgesamt recht preisgünstig ist.

Durch die vertiefte Anordnung des Lichtleiters in der Lesespitze wird erreicht, daß zudem Abschattungen nicht auftreten, so daß das Signal immer gleichbleibend stark zu Verfügung steht. Die Linse ist zweckmäßigerweise als durchsichtiges Kunststoffteil ausgeführt, das ebenfalls leicht herstellbar ist.

### Zeichnung

Ein Ausführungsbeispiel der Erfindung ist in der Zeichnung dargestellt und in der nachfolgenden Beschreibung näher erläutert.

### Beschreibung des Ausführungsbeispiels

Die Figur zeigt ein rundes Gehäuse 1 das beispielsweise als Kunststoffspritzteil ausgeführt ist. Das Gehäuse weist eine Abdeckplatte 2 auf, die Durchbrüche für die Anschlußleitungen und für den Lichtleiter aufweist. In den unteren Teil des Gehäuses 1 ist ein durchsichtiges Formteil eingesteckt, das bleistiftähnlich ausgebildet ist. Das Formteil ist aus durchsichtigem Kunststoff, beispielsweise Plexiglas, hergestellt und weist in seiner Mitte eine Bohrung auf. Im Gehäuse selbst ist eine Leuchtdiode 4 angebracht, die entweder sichtbares oder infrarotes Licht ausstrahlt. Das Formteil 3 ist nunmehr so ausgebildet, daß das durch die Leuchtdiode 4 angekoppelte Licht um einen Punkt herum rotationssymmetrisch, d. h. kreisförmig auf die Oberfläche der Spitze des Formteils 3 fokussiert wird. In der Mitte des Formteiles 3 ist ein Lichtleiter 5 angebracht, der zu einem Fototransistor oder einer Fotodiode 6 führt, die geeignet ist, das von der Leuchtdiode 4 ausgestrahlte Licht aufzunehmen. Der Lichtleiter 5 ist an der Fotodiode 6 beispielsweise mit einem Kleber befestigt. In der Fotodiode 6 wird das von einem Strichcode reflektierte Licht in ein elektrisches Signal umgewandelt und gegebenenfalls verstärkt. Die Fotodiode 6 ist nicht Bestandteil des Gehäuses 1 sondern ist in der Nähe der Auswerteschaltung untergebracht, so daß der Strichcodeleser nicht abgeschirmt sein muß, um elektrische Störeinflüsse fernzuhalten. Dadurch läßt sich der Strichcodeleser sehr preisgünstig gestalten, da aufgrund der kurzen Verbindung zwischen der Fotodiode 6 und der Auswerteschaltung Störungen nicht zu erwarten sind. Der Lichtleiter 5 ist an der Spitze des Formteiles 3 etwas vertieft angebracht, so daß Abschättungen durch ein Berühren des Lichtleiters mit der Oberfläche verbindert sind. Durch die geringfügige Vertiefung wird erreicht, daß auch bei einem senkrechten Aufsetzen des Strichcodeleser keine Abschattung durch eine direkte Berührung des Lichtleiters mit dem Strichcode erfolgt. Der gesamte Strichcodeleser ist aus handelsüblichen Bauteilen aufgebaut. Die speziellen Teile, wie das Formteil 3, ist leicht aus Spritzguß herzustellen, so daß sich insgesamt eine kostengünstige Herstellung des Strichcodelesers ergibt.

## Patentansprüche

1. Strichcodeleser mit einem Lesekopf, einem Lichtsender (4) und einem Lichtempfänger (6), mit einer Linse (3) mit fokussierender Wirkung und mit einem Lichtleiter (5) in der Mitte der Linse, der zum Empfänger führt, dadurch gekennzeichnet, daß die Linse (3) an der Vorderseite des Lesekopfes angeordnet ist und rotationssymmetrisch fokussierend ausgebildet ist und daß der Lichtempfänger (6) im Bereich der Auswerteschaltung angeordnet ist.

2. Strichcodeleser nach Anspruch 1, dadurch gekennzeichnet, daß als Lichtsender (4) eine Leuchtdiode Verwendung findet.

3. Strichcodeleser nach Anspruch 1 oder 2, dadurch gekennzeichnet, daß als Lichtempfänger (6) ein Fototransistor oder eine Fotodiode Verwendung findet.

4. Strichcodeleser nach einem der vorhergehenden Ansprüche, dadurch gekennzeichnet, daß der Lichtleiter (5) an der Lesespitze vertieft angeordnet ist.

5. Strichcodeleser nach einem der vorhergehenden Ansprüche, dadurch gekennzeichnet, daß die Linse (3) als durchsichtiges Kunststoffspritzteil ausgeführt ist.

## Claims

1. Bar code reader having a read head, a light transmitter (4) and a light receiver (6), with a lens (3) having a focussing effect and with a light conductor (5) in the centre of the lens, which leads to the receiver, characterized in that the lens (3) is arranged at the front of the read head and is constructed to be rotationally symmetrically focussing and that the light receiver (6) is arranged in the area of the evaluating circuit.

2. Bar code reader according to Claim 1, characterized in that a light-emitting diode is used as light transmitter (4).

3. Bar code reader according to Claim 1 or 2, characterized in that a photo transistor or a photo diode is used as light receiver (6).

4. Bar code reader according to one of the preceding claims, characterized in that the light conductor (5) is arranged recessed at the reading tip.

5. Bar code reader according to one of the preceding claims, characterized in that the lens (3) is constructed as transparent injection-moulded plastic part.

## Revendications

1. Lecteur de code à barres avec une tête de lecture, avec un émetteur de lumière (4) et un récepteur de lumière (6), avec une lentille (3) assurant une focalisation, et avec un conducteur de lumière (5) dans le milieu de la lentille, ce conducteur aboutissant au récepteur, lecteur de code à barres caractérisé en ce que la lentille (3) est disposée sur la face avant de la tête de lecture, et est réalisée de façon à assurer une focalisation présentant une symétrie de révolution, tandis que le récepteur de lumière (6) est disposé au voisinage du circuit d'évaluation.

2. Lecteur de code à barres selon la revendication 1, caractérisé en ce qu'on utilise comme émetteur de lumière (4) une diode luminescente.

3. Lecteur de code à barres selon la revendication 1 ou 2, caractérisé en ce qu'on utilise comme récepteur de lumière (6), un phototransistor ou bien une photo-diode.

4. Lecteur de code à barres selon une des précédentes revendications, caractérisé en ce que le conducteur de lumière (5) est disposé en profondeur sur la pointe de lecture.

5. Lecteur de code à barres selon une des précédentes revendications, caractérisé en ce que la lentille (3) est réalisée sous la forme d'une pièce injectée en matière plastique transparente.